# EUROPÄISCHE PATENTSCHRIFT

(11) **EP 3 863 898 B1**
(45) Veröffentlichungstag und Bekanntmachung des Hinweises auf die Patenterteilung: **24.08.2022**
(21) Anmeldenummer: 19790437.8
(22) Anmeldetag: 16.09.2019
(51) Int. Cl.: B60T 8/172, B60T 8/1755, B60T 8/1764, B62D 7/15

(54) **VERFAHREN ZUR ERMITTLUNG EINES FAHRBAHNZUSTANDES UND FAHRZEUG MIT MINDESTENS ZWEI RADSELEKTIVEN LENKUNGSAKTUATOREN**
METHOD FOR DETERMINING A ROADWAY CONDITION AND VEHICLE HAVING AT LEAST TWO WHEEL-SELECTIVE STEERING ACTUATORS
PROCÉDÉ POUR DÉTERMINER L'ÉTAT D'UNE CHAUSSÉE ET VÉHICULE COMPRENANT AU MOINS DEUX ACTIONNEURS DE DIRECTION À SÉLECTION DE ROUE

(30) Priorität: 09.10.2018 DE 102018124866
(43) Veröffentlichungstag der Anmeldung: 18.08.2021
(73) Patentinhaber: Schaeffler Technologies AG & Co. KG, 91074 Herzogenaurach (DE)
(72) Erfinder: WÜBBOLT-GORBATENKO, Benjamin, 91052 Erlangen (DE)
(86) Internationale Anmeldenummer: PCT/DE2019/100817
(87) Internationale Veröffentlichungsnummer: WO 2020/074037

(56) Entgegenhaltungen:
- WO-A1-2005/063538
- DE-A1-102009 002 245
- DE-A1-102010 014 564
- DE-A1-102014 114 751
- DE-A1-102014 224 814
- DE-A1-102018 205 904
- US-A1- 2012 053 786

## Beschreibung

Die vorliegende Erfindung betrifft ein Verfahren zur Ermittlung eines Fahrbahnzustands mithilfe von an Lenkungsaktuatoren erfassten Werten. Die Erfindung betrifft darüber hinaus auch ein Fahrzeug, welches zur Ausführung eines solchen Verfahrens geeignet ist, insbesondere ein Fahrzeug mit elektromotorischem Antrieb und elektronischer Steuerung einzelner Räder.

Je nach Fahrbahnzustand weisen Fahrbahnen unterschiedliche Reibwerte auf, die durch verschiedene Faktoren beeinflusst werden. Ein erster Faktor ist das Wetter, so kann die Fahrbahn z.B. trocken, nass oder vereist sein. Weiterhin wird der Fahrbahnzustand durch das Alter beeinflusst sein, wobei sich Spurrinnen und glatt gefahrene Stellen ausbilden können. Ebenso können auf der Fahrbahn unerwartete Materialien abgelagert sein, beispielsweise Verunreinigungen durch Öl oder Sedimente. Solche Faktoren können großflächig, aber auch punktuell auftreten, sodass der Fahrbahnzustand inhomogen ist und unterschiedliche Reibwerte aufweist.

Unter inhomogenem Fahrbahnzustand wird hier allgemein eine Differenz der Reibwerte zwischen den beiden Reifen einer Achse verstanden, wobei jeweils die Reibwerte zwischen Straßenoberflächen und Reifen betrachtet werden. Unterschiedliche Reibwertverteilung einer Fahrbahn wird auch als µ-Split-Situation bezeichnet.

Bei inhomogenen Fahrbahnzuständen bzw. Fahrbahnbeschaffenheiten und beispielsweise unangepasster Fahrweise, können gefährliche Situationen entstehen. Auch das Anfahren oder Beschleunigen kann negativ beeinflusst werden. Um gefährliche Situationen abzuschwächen oder zu verhindern, sind verschiedene Assistenzsysteme, welche im Fahrzeug eingebaut sind, bekannt. Dazu zählen unter anderem Fahrzeugregelsysteme wie Traktions-, Brems- bzw. Stabilitätsregelsysteme, insbesondere ESC (Electronic Stability Control), TCS (Traction Control System) oder ABS (Antiblockiersystem). Durch Kenntnis der Fahrbahnbeschaffenheit ist es den Fahrzeugregelsystemen möglich, durch entsprechende Fahrerwarnung Gefahren vorzubeugen oder durch Brems- oder Lenkeingriffe das Fahrzeug in Gefahrensituationen zu stabilisieren.

Ebenso ist die Kenntnis des Fahrbahnzustands für das sogenannte autonome Fahren von großer Wichtigkeit.

Grundsätzlich kann der Fahrbahnzustand wird mittels Sensoren erfasst oder durch Schätzung des jeweiligen µ-Wertes bzw. Reibwertes zwischen Straßenoberfläche und Reifen anhand von Modellen, welche mit Zustandsinformationen des Fahrzeugs versorgt werden, prognostiziert.

In der DE 42 39 177 A1 wird ein Verfahren zur Anpassung einer Blockierschutzregelung an den jeweiligen Straßenzustand beschrieben. Durch Erfassung des jeweiligen Raddrehverhaltens und der Fahrzeugreferenzgeschwindigkeit wird der zeitliche Verlauf der Fahrzeugverzögerung und des mittleren Schlupfes bestimmt. Die Phasenlage der Fahrzeugverzögerung und des mittleren Schlupfes werden miteinander verglichen. Die Fahrbahncharakteristik (Typ A, Typ B; wobei Typ B eine Straße mit µ-Schlupf-Charakteristik ohne ausgeprägtes Maximum ist) wird durch die jeweilige Phasenlage ermittelt.

Die DE 10 2015 212 948 A1 zeigt eine Antriebsmomentenkompensation bei µ-Split-Situationen, wobei ein Verfahren zur Verbesserung des Beschleunigungsverhaltens eines Fahrzeuges beschrieben wird. Ein Schlupf eines angetriebenen Rades des Fahrzeugs wird durch ein auf das Rad des Fahrzeugs eingebrachtes Bremsmoment reduziert. Das Verfahren umfasst das Ermitteln eines Indizes dafür, dass sich ein erstes angetriebenes Rad des Fahrzeugs auf einer ersten Fahrbahn-Seite befindet, die einen geringeren Kraftschluss mit dem ersten angetriebenen Rad ermöglicht, als eine zweite Fahrbahn-Seite mit einem zweiten angetriebenen Rad des Fahrzeugs. Außerdem umfasst das Verfahren das Bestimmen, auf Basis des Indizes, ob eine µ-Split Situation vorliegt. Bei vorliegender µ-Split Situation wird ein Brems-Kompensationsmoment bereitgestellt.

Aus der DE 10 2016 215 793 B4 ist ein radselektiver Traktionsantrieb bekannt, der durch gezieltes Verteilen der Antriebsleistung auf einzelne Räder eine Beeinflussung der Querdynamik des Fahrzeugs durch Variation vornehmlich längsdynamischer Größen ermöglicht. Durch die Nutzung radselektiver Traktionsantriebe an der gelenkten Achse eines Fahrzeugs kann ein Einlenken der Räder durch eine gezielte Einstellung von Differenzen der Antriebsleistung erzeugt werden.

Aus der DE 10 2006 043 931 A1 ist ein Verfahren zum Ermitteln einer inhomogenen Fahrbahn bekannt, wobei sich ein Fahrzeug in einer Fahrsituation befindet, bei der die Fahrbahn seitenweise unterschiedliche Reibwerte (µ-Split) aufweist und eine aktive ABS-Regelung und eine aktive Giermomentbegrenzung vorliegt, wobei sich ein Vorderrad auf der Hochreibwertseite befindet. Durch Einhaltung definierter Bedingungen wird im Antiblockierregler eine µ-Split-Erkennung zur Verfügung gestellt, die von einem aktiven Lenksystem genutzt werden kann.

In der DE 10 2015 211 482 A1 sind ein Verfahren und eine Vorrichtung zur Ermittlung eines Minimalwertes für den Reibwert eines Straßensegments beschrieben. Das Verfahren sieht vor, dass mittels einer in einem ersten Fahrzeug enthaltenen Umfeldsensorik wenigsten eine die Fahrzeugbewegung kennzeichnende Bewegungsgröße eines zweiten Fahrzeugs ermittelt wird. Anhand der Bewegungsgröße des zweiten Fahrzeugs wird ein Minimalwert für den Reibwert des vom zweiten Fahrzeug befahrenen Straßensegments ermittelt. Weiterhin wird die räumliche Lage des ersten Fahrzeugs ermittelt. Des Weiteren wird die relative Lage des zweiten Fahrzeugs gegenüber dem ersten Fahrzeug mittels der Umfeldsensorik und der räumlichen Lage des erstens Fahrzeugs bestimmt. In einer Datenbank werden die räumlich Lage des zweiten Fahrzeugs sowie der Minimalwert hinterlegt.

Aus der DE 10 2012 112 724 A1 ist ein Verfahren zur Bestimmung eines Fahrbahnzustandes aus Umfeldsensordaten bekannt. Zur Bestimmung des Fahrbahnzustandes ist eine Fusion von Daten aus mindestens einer Vorrichtung, die einen lokalen Fahrbahnzustand oder Reibwert misst, mit Daten einer Kamera zur Erfassung einer vorausliegenden Fahrbahn vorgesehen. Der lokale Fahrbahnzustand kann mittels eines Sensors ermittelt werden.

In der DE 10 2017 109 649 B3 wird ein Verfahren zur Bestimmung des Reibwertes eines Fahrzeugreifens auf einer Oberfläche beschrieben. Es wird die auf ein Radlager oder ein Radträger einwirkende Kraft bei Beschleunigung eines Fahrzeugrades, welches das Radlager oder den Radträger aufweist, bestimmt. Zum Bestimmen der einwirkenden Kraft ist ein zusätzlicher Sensor erforderlich.

In der US 2012053786 wird ein Verfahren zur Bestimmung des Reibwerts eines Fahrzeugreifens auf einer Fahrbahn unter Verwendung eines aktiven Lenksystems.

Eine Aufgabe der vorliegenden Erfindung besteht ausgehend vom Stand der Technik darin, ein Verfahren zur Ermittlung eines Fahrbahnzustandes bereitzustellen, welches keine zusätzliche Sensorik benötigt und dadurch kostenarm und dennoch zuverlässig sowie ausreichend präzise arbeitend gestaltet ist. Außerdem wird eine Aufgabe in der Bereitstellung eines Fahrzeugs zur Ausführung dieses Verfahrens gesehen.

Die genannte Aufgabe wird durch ein Verfahren zur Ermittlung eines Fahrbahnzustandes nach dem beigefügten Anspruch 1 sowie durch ein Fahrzeug mit mindestens zwei radselektiven Lenkungsaktuatoren gemäß dem beigefügten nebengeordneten Anspruch 10 gelöst.

Das erfindungsgemäße Verfahren dient der Ermittlung eines Fahrbahnzustandes vorzugsweise mittels in einem Fahrzeug bereits zur Erfüllung anderer Funktionen integrierter Bauteile. Das Fahrzeug weist Fahrzeugräder auf, wobei an wenigstens zwei Fahrzeugrädern jeweils ein Lenkungsaktuator angeordnet ist. Das Fahrzeug weist mindestens eine Fahrzeugachse auf, an der mindestens zwei Fahrzeugräder gegenüberliegend entlang einer (virtuellen) Achse angeordnet sind. Die Fahrzeugachse zweier gegenüberliegender Fahrzeugräder kann aus voneinander separierten Radträgern bestehen. Das Verfahren zur Ermittlung eines Fahrbahnzustandes sieht in einem ersten Schritt vor, dass eine Ist-Größe eines ersten Lenkungsaktuators erfasst wird. In einem weiteren Verfahrensschritt wird eine Ist-Größe eines zweiten Lenkungsaktuators erfasst. Diese beiden erfassten Ist-Größen repräsentieren die vom jeweiligen Lenkungsaktuator aufgebrachte Lenkkraft, welche komplementär ist den auf das gelenkte Fahrzeugrad aufgrund des aktuellen Fahrbahnzustands einwirkenden Kräfte. Ein weiterer Verfahrensschritt sieht vor, dass die beiden Ist-Größen der beiden Lenkungsaktuatoren verglichen werden. Aus dem Vergleich kann eine Abweichung bzw. Differenz festgestellt werden, sodass in einem weiteren Verfahrensschritt ein Inhomogenitätssignal aus der Abweichung zwischen den erfassten Ist-Größen der beiden Lenkungsaktuatoren ermittelt wird. Ein innerhalb eines vorbestimmten Toleranzbereiches liegendes Inhomogenitätssignal repräsentiert eine homogene Fahrbahn bzw. einen homogenen Fahrbahnzustand. Ein außerhalb des Toleranzbereiches liegendes Inhomogenitätssignal repräsentiert eine inhomogene Fahrbahn bzw. einen inhomogenen Fahrbahnzustand. Da das Inhomogenitätssignal aus Messwerten von zwei entlang einer Fahrzeugachse beabstandet angeordneten Fahrzeugrädern generiert wird, signalisiert das Verlassen des vorbestimmten Toleranzbereiches, dass der Fahrbahnzustand quer zur Fahrtrichtung des Fahrzeugs inhomogen ist.

Der Vergleich der Ist-Größen der Lenkungsaktuatoren kann vorzugsweise mittels Differenzbildung zwischen den Ist-Größen erfolgen, wobei der Betrag der Differenz das Inhomogenitätssignal bildet. Das Inhomogenitätssignal korreliert mit dem unterschiedlichen Fahrbahnzustand, sodass das Inhomogenitätssignal mit steigender Inhomogenität der Fahrbahn größer wird.

Bevorzugt umfasst jeder Lenkungsaktuator einen Elektromotor sowie ein mechanisches Übertragungsglied. Das mechanische Übertragungsglied kann beispielsweise ein Ritzel oder ein Getriebe sein. Der Elektromotor des Lenkungsaktuators ist vorzugsweise mit einem Steuergerät verbunden.

Zum Erfassen der Ist-Größe der Lenkungsaktuatoren wird eine an sich bekannte Messvorrichtung verwendet. Solche Messvorrichtungen sind regelmäßig in Lenksystemen intergiert. Bevorzugt wird die Ist-Größe von dem Elektromotor des Lenkungsaktuators abgegriffen. Die Messvorrichtung ist bevorzugt an dem Elektromotor angeordnet oder in diesen integriert. Alternativ bevorzugt ist die Messvorrichtung an dem Steuergerät angeordnet oder in dieses integriert, um beispielsweise die an die Lenkungsaktuatoren gelieferten Aktivierungsströme zu bestimmen.

Die erfassten Ist-Größen der Lenkungsaktuatoren sind bevorzugt Stellmomente. Das Stellmoment kann ein Lenkmoment sein. Alternativ bevorzugt ist die erfasste Ist-Größe der Lenkungsaktuatoren ein elektrischer Strom. Aus den erfassten Ist-Größen kann in einem bevorzugten Schritt jeweils ein Lenkmoment bestimmt werden, wobei die Lenkmomente zur Bestimmung des Inhomogenitätssignals verwendet werden.

Vorzugsweise wird das ermittelte Inhomogenitätssignal in einem Fahrzeugregelsystem zur Stabilisierung der Fahrzeugräder während einer Schlupf-Situation oder einer µ-Split-Situation verwendet. Das Fahrzeugregelsystem kann unter Verwendung des Inhomogenitätssignal ein Kompensationsmoment, insbesondere ein Bremsmoment oder ein Antriebsmoment, bestimmen, welches auf mindestens ein Fahrzeugrad aufgebracht wird. Vorzugsweise wird aus dem Inhomogenitätssignal unter Beachtung der erfassten Ist-Größen der Lenkungsaktuatoren für jedes einzelne Fahrzeugrad durch das Fahrzeugregelsystem das aufzubringende Bremsmoment oder Antriebsmoment bestimmt. Durch die Verwendung des ermittelten Inhomogenitätssignals in dem Fahrzeugregelsystem wird das Fahrzeug vorteilhafterweise stabilisiert.

Das Verfahren zur Ermittlung eines inhomogenen Fahrbahnzustands kommt vorzugsweise in Fahrzeugen mit radselektivem Lenksystem zum Einsatz. Besonders bevorzugt kommt das Verfahren zur Ermittlung eines Fahrbahnzustands in Fahrzeugen mit radselektiven Steer-by-Wire-Systemen, die keine mechanische Lenkstange zwischen Lenkrad und Fahrzeugachse aufweisen, zum Einsatz.

Die Ist-Größen werden insbesondere durch den Reibwert des Fahrbahnzustandes bestimmt. Weitere Einflussfaktoren, wie der Radeinschlag durch eine Lenkbewegung oder ein auftretendes Giermoment am Fahrzeug können die Ist-Größe indirekt beeinflussen. Die vom Fahrzeug vorgegebene Auslenkung kann beispielsweise bei Steer-by-Wire-System sowie beim autonomen Fahren bestimmt und aus dem Inhomogenitätssignal herausgerechnet bzw. von der Steuereinheit berücksichtigt werden.

Das Verfahren kommt insbesondere in zweiachsigen Fahrzeugen zur Anwendung. Alternativ wird das Verfahren in mehrachsigen Fahrzeugen angewendet. Das Verfahren wird an mindestens zwei an derselben Fahrzeugachse befindlichen Fahrzeugrädern ausgeführt. Vorzugsweise wird das Verfahren an zwei Fahrzeugachsen mit jeweils mindestens zwei Fahrzeugrädern ausgeführt.

Vorzugsweise weist jedes Fahrzeugrad einen an diesem angeordneten Lenkungsaktuator auf. Besonders bevorzugt weist jedes Fahrzeugrad einen an diesem angeordneten radselektiven Lenkungsaktuator auf.

Das Fahrzeug kann durch einen Fahrer gelenkt werden oder zum autonom Fahren ausgebildet sein.

Das erfindungsgemäße Verfahren zur Ermittlung eines Fahrbahnzustandes hat den Vorteil, dass keine weitere Sensorik zur Bestimmung des Fahrbahnzustandes notwendig ist, da sowieso vorliegende Werte von den Lenkungsaktuatoren genutzt werden. Dadurch ergibt sich vorteilhafterweise auch eine Kostenersparnis sowie ein geringer Bauraumbedarf.

Das erfindungsgemäße Fahrzeug mit mindestens zwei radselektiven Lenkungsaktuatoren umfasst mindestens zwei Fahrzeugräder, wobei die beiden Fahrzeugräder entlang derselben Achse angeordnet sind. Die Fahrzeugräder sind an in der bekannten Weise mechanisch und/oder elektrisch miteinander gekoppelt. Die Fahrzeugachse kann durchgängig ausgebildet sein oder aus voneinander separierten Radträgern bestehen. Jeweils ein Lenkungsaktuator ist an einem Fahrzeugrad angeordnet. Weiterhin umfasst das Fahrzeug ein Steuergerät, welches mit den Lenkungsaktuatoren in elektrischer Verbindung steht. Das Steuergerät ist dazu ausgebildet, das zuvor beschriebene Verfahren zur Ermittlung eines Fahrbahnzustandes mit all seinen Ausführungsformen auszuführen.

Weitere Einzelheiten, Vorteile und Weiterbildungen der Erfindung ergeben sich aus der nachfolgenden Beschreibung einer bevorzugten Ausführungsform der Erfindung, unter Bezugnahme auf die Zeichnung. Es zeigen:
- Fig. 1: eine schematische Teilansicht einer Fahrzeugradaufhängung mit einer ersten Ausführungsform eines radselektiven Lenkungsaktuators;
- Fig. 2: eine schematische Teilansicht einer zweiten Ausführungsform des radselektiven Lenkungsaktuators.

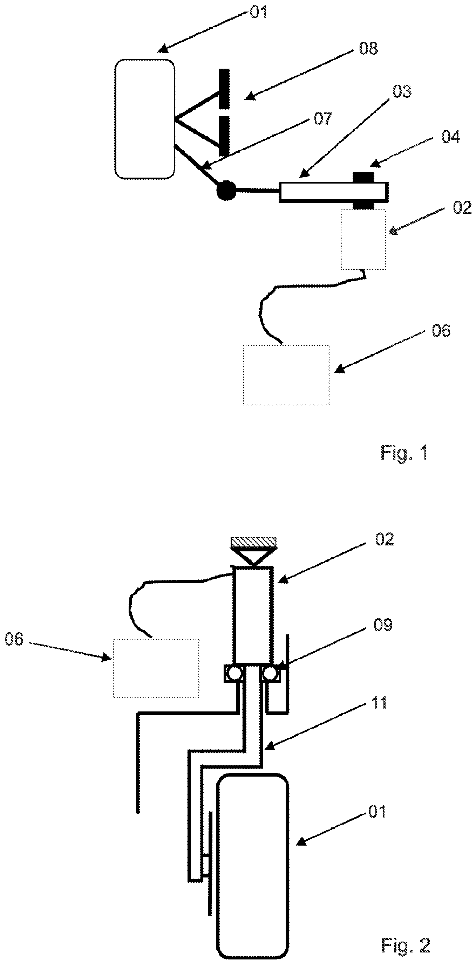

Fig. 1 zeigt eine schematische Teilansicht einer Fahrzeugradaufhängung mit einer ersten Ausführungsform eines radselektiven Lenkungsaktuators bzw. einer radselektiven Fahrzeuglenkung. Der radselektive Lenkungsaktuator ist in einem Fahrzeug anwendbar und ist als Linearaktuator ausgebildet. Der Lenkungsaktuator ist an einem Fahrzeugrad 01 angeordnet und umfasst einen Elektromotor 02, eine Zahnradstange 03 sowie ein zwischen der Zahnradstange 03 und dem Elektromotor 02 angeordnetes Ritzel 04, welches als Verbindungselement dient. An den Elektromotor 02 ist ein Steuergerät 06 angeschaltet. Der Lenkungsaktuator ist mittels der Zahnradstange 03 gelenkig mit einem Umlenkhebel 07 verbunden. Der Umlenkhebel 07 greift an dem Fahrzeugrad 01 an, sodass der Lenkungsaktuator mit dem Fahrzeugrad 01 in Verbindung steht. Die Fahrzeugradaufhängung weist weiterhin einen Fahrwerkslenker 08 auf, der an dem Fahrzeugrad 01 angeordnet ist und des Weiteren die Verbindungsstelle zu einer Fahrzeugkarosserie (nicht gezeigt) bildet.

Der radselektive Lenkungsaktuator ist dazu ausgebildet, dass erfindungsgemäße Verfahren zur Ermittlung eines Fahrbahnzustandes auszuführen. An einer gemeinsamen Fahrzeugachse (nicht gezeigt) sind mindestens zwei Fahrzeugräder 01 angeordnet, wobei an jedem Fahrzeugrad 01 ein eigener radselektiver Lenkungsaktuator angeordnet ist. Die Lenkungsaktuatoren sind somit auf verschiedenen Fahrzeugseiten (links, rechts) angeordnet.

Das Verfahren sieht vor, dass in einem ersten Schritt eine Ist-Größe des ersten Lenkungsaktuators und in einem weiteren Schritt eine Ist-Größe des zweiten Lenkungsaktuators ermittelt wird. Die Ist-Größen werden mittels einer Messvorrichtung (nicht gezeigt) erfasst. Die Messvorrichtung ist an dem Elektromotor 02 angeordnet oder in diesen integriert. Alternativ kann die Messvorrichtung an dem Steuergerät 06 angeordnet oder in dieses integriert sein. Weiterhin kann die Messvorrichtung auch im Fahrwerk integriert sein. Es wird ein Motorstrom erfasst. Mittels des Steuergerätes 06 erfolgt in einem weiteren Verfahrensschritt ein Vergleich der erfassten Ist-Größen der zwei Lenkungsaktuatoren. Das Steuergerät 06 ermittelt ein Inhomogenitätssignal aus der Abweichung zwischen den Ist-Größen, wobei ein innerhalb eines Toleranzbereiches liegendes Inhomogenitätssignal einen homogenen Fahrbahnzustand repräsentiert und ein außerhalb des Toleranzbereiches liegendes Inhomogenitätssignal einen inhomogenen Fahrbahnzustand repräsentiert. Mittels des ermittelten Inhomogenitätssignals kann ein Kompensationsmoment, beispielsweise ein Soll-Antriebsmoment und/oder ein Bremsmoment und/oder ein Soll-Lenkeingriff erzeugt werden, welches in einem Fahrzeugregelsystem oder einem Assistenzsystem als Eingangsgröße zur Anwendung kommen kann. Beispielsweise wird ein Lenkwinkel eingestellt. Mittels des erfassten Motorstromes als Ist-Größe des Lenkungsaktuators wird das Lenkmoment bestimmt. Das Lenkmoment kann aus der auf das Fahrzeugrad 01 wirkende Seitenkraft und dem zugeordneten Hebelarm durch Multiplikation berechnet werden, wobei der Hebelarm sich aus der Addition eines Reifennachlaufs mit einem konstruktiven Nachlauf ergibt. Es besteht ein funktional eindeutiger Zusammenhang zwischen dem Motorstrom und der Stellkraft des Lenkungsaktuators.

Fig. 2 zeigt eine schematische Teilansicht einer zweiten Ausführungsform des radselektiven Lenkungsaktuators. Der in Fig. 2 gezeigte radselektive Lenkungsaktuator weist den Elektromotor 02 oder einen abgewandelten Elektromotor mit Getriebe auf. Der Elektromotor 02 ist mittelbar drehbar auf einem Wälzlager 09 gelagert. Weiterhin umfasst der Lenkungsaktuator das Steuergerät 06, welches mit dem Elektromotor 02 elektrisch verbunden ist. Mittels eines Fahrzeugbauteils 11 zur Einstellung eines Lenkwinkels ist der Elektromotor 02 mit dem Fahrzeugrad 01 mechanische und/oder elektrisch gekoppelt. Der radselektive Lenkungsaktuator ist dazu ausgebildet, dass im Zusammenhang mit Fig. 1 beschriebene erfindungsgemäße Verfahren zur Ermittlung eines Fahrbahnzustandes auszuführen. Mittels des erfassten Motorstromes als Ist-Größe des Lenkungsaktuators wird das Lenkmoment bestimmt. Abweichend zu der in Fig. 1 beschriebenen Lenkmomentermittlung entspricht das in Fig. 2 zu bestimmende Lenkmoment einem Motormoment. Das Motormoment kann mittels einer Multiplikation der Drehmomentkonstante mit dem Motorstrom berechnet werden.

### Bezugszeichenliste

- 01: Fahrzeugrad
- 02: Elektromotor
- 03: Zahnradstange
- 04: Ritzel
- 05: -
- 06: Steuergerät
- 07: Umlenkhebel
- 08: Fahrwerkslenker
- 09: Wälzlager
- 10: -
- 11: Fahrzeugbauteil

## Patentansprüche

1. Verfahren zur Ermittlung eines Fahrbahnzustandes mittels Lenkungsaktuatoren, wobei die mindestens zwei Lenkungsaktuatoren an jeweils einem derselben Fahrzeugachse zugeordneten Fahrzeugrad (01) angeordnet sind, folgende Schritte umfassend:
- Erfassung einer Ist-Größe des ersten Lenkungsaktuators;
- Erfassung einer Ist-Größe des zweiten Lenkungsaktuators;
- Vergleichen der erfassten Ist-Größen der beiden Lenkungsaktuatoren;
**gekennzeichnet durch** das
- Ermitteln eines Inhomogenitätssignals aus der Abweichung zwischen den erfassten Ist-Größen der beiden Lenkungsaktuatoren, wobei ein innerhalb eines Toleranzbereiches liegendes Inhomogenitätssignal einen homogenen Fahrbahnzustand repräsentiert und ein außerhalb des Toleranzbereiches liegendes Inhomogenitätssignal einen inhomogenen Fahrbahnzustand repräsentiert.

2. Verfahren nach Anspruch 1, **dadurch gekennzeichnet, dass** jeder Lenkungsaktuator einen Elektromotor (02) und ein (mechanisches) Übertragungsglied (03, 04) umfasst, wobei die Ist-Größe am Elektromotor erfasst wird.

3. Verfahren nach Anspruch 1 oder 2, **dadurch gekennzeichnet, dass** die Ist-Größe als ein Stellmoment oder ein elektrischer Strom erfasst wird.

4. Verfahren nach einem der Ansprüche 1 bis 3, **dadurch gekennzeichnet, dass** die Ist-Größe mittels einer dem Lenkungsaktuator zugehörigen Messvorrichtung ermittelt wird.

5. Verfahren nach Anspruch 2, **dadurch gekennzeichnet, dass** der Elektromotor (02) des Lenkungsaktuators mit einem Steuergerät (06) verbunden ist.

6. Verfahren nach einem der Ansprüche 1 bis 5, **dadurch gekennzeichnet, dass** das ermittelte Inhomogenitätssignal in einem Fahrzeugregelsystem zur Stabilisierung der Fahrzeugräder (01) und damit eines Fahrzeuges verwendet wird.

7. Verfahren nach Anspruch 6, **dadurch gekennzeichnet, dass** das ermittelte Inhomogenitätssignal zur Bestimmung eines Soll-Antriebsmomentes und/oder eines Bremsmomentes und/oder eines Soll-Lenkeingriffs verwendet wird, wobei das Soll-Antriebsmoment und/oder das Bremsmoment und/oder der Soll-Lenkeingriff mittels des Fahrzeugregelsystems mindestens einem Fahrzeugrad (01) eingeprägt wird.

8. Verfahren nach einem der Ansprüche 1 bis 7, **dadurch gekennzeichnet, dass** das Verfahren in einer radselektiven Fahrzeuglenkung angewendet wird.

9. Verfahren nach Anspruch 8, **dadurch gekennzeichnet, dass** die radselektive Fahrzeuglenkung ein radselektives Steer-by-Wire System ist.

10. Fahrzeug mit mindestens zwei Fahrzeugrädern (01), die an derselben Achse angeordnet sind sowie mechanisch und/oder elektrisch gekoppelt sind, wobei jeweils ein Lenkungsaktuator an jedem der zwei Fahrzeugräder (01) angeordnet ist, und mit einem Steuergerät (06), welches mit den Lenkungsaktuatoren gekoppelt ist, **dadurch gekennzeichnet, dass** das Steuergerät (06) dazu ausgebildet ist, ein Verfahren zur Ermittlung eines Fahrbahnzustandes gemäß einem der Ansprüche 1 bis 9 auszuführen.

## Claims

1. A method for determining a roadway condition by means of steering actuators, wherein the at least two steering actuators are each arranged on a vehicle wheel (01) associated with the same vehicle axle, comprising the following steps:
- detecting a measurement variable of the first steering actuator;
- detecting a measurement variable of the second steering actuator;
- comparing the detected measurement variables of the two steering actuators;
**characterised by**
- determining an inhomogeneity signal from the deviation between the detected measurement variables of the two steering actuators, wherein a inhomogeneity signal lying within a tolerance range represents a homogeneous roadway condition and a inhomogeneity signal lying outside the tolerance range represents an inhomogeneous roadway condition.

2. The method according to claim 1, **characterised in that** each steering actuator comprises an electric motor (02) and a (mechanical) transmission element (03, 04), wherein the measurement variable is detected on the electric motor.

3. The method according to claim 1 or 2, **characterised in that** the measurement variable is detected as an actuating torque or an electrical current.

4. The method according to one of claims 1 to 3, **characterised in that** the measurement variable is determined by means of a measuring device associated with steering actuator.

5. The method according to claim 2, **characterised in that** the electric motor (02) of the steering actuator is connected to a control device (06).

6. The method according to one of claims 1 to 5, **characterised in that** the determined inhomogeneity signal is used in a vehicle control system to stabilise the vehicle wheels (01) and thus a vehicle.

7. The method according to claim 6, **characterised in that** the determined inhomogeneity signal is used to specify a target drive torque and/or a braking torque and/or a target steering intervention, wherein the target drive torque and/or the braking torque and/or the target steering intervention is impressed on at least one vehicle wheel (01) by means of the vehicle control system.

8. The method according to one of claims 1 to 7, **characterised in that** the method is used in a wheel-selective steering actuator.

9. The method according to claim 8, **characterised in that** the wheel-selective steering actuator is a wheel-selective steer-by-wire system.

10. A vehicle having at least two vehicle wheels (01), which are arranged on the same axle and are mechanically and/or electrically coupled, wherein a steering actuator is respectively arranged on each of the two vehicle wheels (01), and having a control device (06), which is coupled to the steering actuators, **characterised in that** the control device (06) is designed to carry out a method for determining a roadway condition according to one of claims 1 to 9.

## Revendications

1. Procédé pour déterminer l'état d'une chaussée au moyen d'actionneurs de direction, dans lequel les au moins deux actionneurs de direction sont disposés au niveau d'une roue de véhicule (01) respective associée au même essieu de véhicule, comprenant les étapes suivantes :
- acquisition d'une grandeur réelle du premier actionneur de direction ;
- acquisition d'une grandeur réelle du second actionneur de direction ;
- comparaison des grandeurs réelles acquises des deux actionneurs de direction ;
**caractérisé par**
- la détermination d'un signal d'inhomogénéité à partir de l'écart entre les grandeurs réelles acquises des deux actionneurs de direction, dans lequel un signal d'inhomogénéité se trouvant au sein d'une plage de tolérance représente un état de la chaussée homogène et un signal d'inhomogénéité se trouvant en dehors de la plage de tolérance représentant un état de la chaussée non homogène.

2. Procédé selon la revendication 1, **caractérisé en ce que** chaque actionneur de direction comprend un moteur électrique (02) et un élément de transmission (mécanique) (03, 04), dans lequel la grandeur réelle est acquise au niveau du moteur électrique.

3. Procédé selon la revendication 1 ou 2, **caractérisé en ce que** la grandeur réelle est acquise sous forme de couple de réglage ou de courant électrique.

4. Procédé selon l'une quelconque des revendications 1 à 3, **caractérisé en ce que** la grandeur réelle est déterminée au moyen d'un dispositif de mesure associé à l'actionneur de direction.

5. Procédé selon la revendication 2, **caractérisé en ce que** le moteur électrique (02) de l'actionneur de direction est relié à un appareil de commande (06).

6. Procédé selon l'une quelconque des revendications 1 à 5, **caractérisé en ce que** le signal d'inhomogénéité déterminé est utilisé dans un système de régulation de véhicule pour la stabilisation des roues de véhicule (01) et ainsi d'un véhicule.

7. Procédé selon la revendication 6, **caractérisé en ce que** le signal d'inhomogénéité déterminé est utilisé pour déterminer un couple moteur de consigne et/ou un couple de freinage et/ou une mise en prise de bielle de consigne, dans lequel le couple moteur de consigne et/ou le couple de freinage et/ou la mise en prise de bielle de consigne est/sont appliqué(s) à au moins une roue de véhicule (01) au moyen du système de régulation de véhicule.

8. Procédé selon l'une quelconque des revendications 1 à 7, **caractérisé en ce que** le procédé est employé dans une direction de véhicule à sélection de roue.

9. Procédé selon la revendication 8, **caractérisé en ce que** la direction de véhicule à sélection de roue est un système à sélection de roue à commande par câble.

10. Véhicule comprenant au moins deux roues de véhicule (01) qui sont disposées sur le même essieu et sont accouplées mécaniquement et/ou électriquement, dans lequel un actionneur de direction est respectivement disposé sur chacune des deux roues de véhicule (01) et comprenant un appareil de commande (06), qui est couplé avec les actionneurs de direction, **caractérisé en ce que** l'appareil de commande (06) est conçu pour mettre en œuvre un procédé pour déterminer l'état d'une chaussée selon l'une quelconque des revendications 1 à 9.
